# EUROPEAN PATENT APPLICATION

(11) **EP 1 207 140 A1**
(43) Date of publication of application: **22.05.2002**
(21) Application number: 01308970.1
(22) Date of filing: 23.10.2001
(51) Int. Cl.: C03B 37/026, C03B 37/012

(54) **Method for making electrically controllable optical fiber devices**

(30) Priority: 20.11.2000 US 716513
(71) Applicant: LUCENT TECHNOLOGIES INC., Murray Hill, New Jersey 07974-0636 (US)
(72) Inventor: Burdge, Geoffrey L., Edgewater, MD 21037 (US); Digiovanni, David John, Montclair, New Jersey 07042 (US); Eggleton, Benjamin John, Summit, New Jersey 07901 (US); Fleming, James William, Westfield, New Jersey 07090 (US); Kranz, Karen S., Middlesex, New Jersey 08846 (US); Windeler, Robert Scott, Clinton, New Jersey 08801 (US); Zydzik, George John, Columbia, New Jersey 07832 (US)
(74) Representative: Buckley, Christopher Simon Thirsk

(57) **Abstract**

In accordance with the invention, electrically controllable optical fiber devices are made by providing a fiber preform (10) having a core (11) and cladding (12), including one or more conductor-filled holes (13A,13B) in the cladding (12), and drawing from the preform optical fiber having integral embedded longitudinal conductors.

## Description

### FIELD OF THE INVENTION

This invention relates to electrically controllable optical fiber devices and, in particular, to a method of making optical fiber devices having integral embedded longitudinal conductors.

### BACKGROUND OF THE INVENTION

Optical fiber communication systems are beginning to achieve their great potential for the rapid transmission of vast amounts of information. In essence, an optical fiber system comprises a source of information-carrying optical signals, an optical fiber transmission network for carrying the optical signals and a receiver for detecting the optical signals and demodulating the information they carry. The signals are typically within a wavelength range favorable for propagation within silica optical fibers and preferably comprise a plurality of wavelength-distinct channels within that range.

The optical fibers are thin strands of glass capable of transmitting optical signals over long distances with very low loss. They are small diameter waveguides characterized by a core with a first index of refraction surrounded by a cladding having a second (lower) index of refraction. Light rays impinge upon the core at an angle less than a critical acceptance angle undergo total internal reflection within the fiber core. These rays are guided along the fiber with low attenuation. Typical fibers are made of high purity silica with doping in the core to raise the core index of refraction. A transmission network may include many long segments of such fiber separated by intermediate nodes for adding or dropping off signal channels.

A practical optical fiber network requires a variety of devices for combining, directing, separating and compensating the transmitted signals. In high performance systems such devices are needed for compensating dispersion, flattening amplifier gain, reconfiguring add/drop multiplexers, switching and modulation.

Increasingly these functions are being performed by electrically controllable devices that manipulate light by modifying the refractive properties or absorptive properties of the media through which the light propagates. For example, the wavelengths of light reflected by a fiber Bragg grating or diverted by a long period grating can be changed by the electrically controlled application of heat, strain or voltage.

Typically such devices require associated conductive elements such as resistive heaters or electrodes. As is well known, an optical fiber Bragg grating comprises a length of fiber having periodic sequence of index perturbations in its core. Such devices reflect narrow bands of light at center wavelengths proportional to the optical pathlength between successive perturbations. Adjustable Bragg gratings have been made by applying resistive metal surface coatings along the length of the grating region. Current through the coating heats the fiber, changing the effective path length between perturbations and thus adjusting the wavelength of the reflection bands. Similar resistive coatings have been used to thermally adjust the wavelengths diverted by long period fiber gratings.

In other devices conductive electrodes are applied to optical fibers to control their characteristics. For example electro-optic materials or liquid crystal materials can be incorporated in a fiber, and an electrical field between the electrodes can be used to vary the index of refraction of these materials.

While the conductive elements have usually been applied to the surface of the fibers, this location places an intervening layer of cladding between the conductive elements and the core through which the bulk of the transmitted light passes. As a consequence, heat effects on the core are delayed and field strengths at the core are reduced.

Efforts have been made to locate conductive elements closer to the core. One such approach involved drilling holes in a fiber preform, drawing fiber from the preform, and inserting tiny conductive wires in the shrunken holes. Voltage was then applied between the wires to induce a nonlinear response. See, for example, W. Xu, "Evidence of Space-Charge Effects in Thermal Poling", IEEE Photonics Technology Letters, Vol. 11, No. 10, October, 1999, p. 1265. Difficulties with this process include the problem of threading fine wire through tiny holes and an inability to form long lengths of the threaded product.

Accordingly there is a need for an improved method for making optical fiber devices having longitudinal conductors.

### SUMMARY OF THE INVENTION

In accordance with the invention, electrically controllable optical fiber devices are made by providing a fiber preform including one or more conductor-filled holes, and drawing from the preform optical fiber having integral embedded longitudinal conductors.

### BRIEF DESCRIPTION OF THE DRAWINGS

The advantages, nature and various additional features of the invention will appear more fully upon consideration of the illustrative embodiments now to be described in detail in connection with the accompanying drawings. In the drawings:
Fig. 1 is a schematic block diagram illustrating the steps involved in making optical fiber having integral longitudinally extending conductive elements;
Fig. 2 is a schematic view of a preform assembly useful in the process of Fig. 1;
Fig. 3 is a schematic cross section of an electro-optically adjustable grating made by the process of Fig. 1; and
Fig. 4 is a schematic cross section of a thermally adjustable grating made by the process of Fig. 1.
Figs. 5A and 5B illustrate in traverse cross section exemplary polarization control devices made by the process of Fig. 1.

It is to be understood that these drawings are for purposes of illustrating the concepts of the invention and are not to scale.

### DETAILED DESCRIPTION

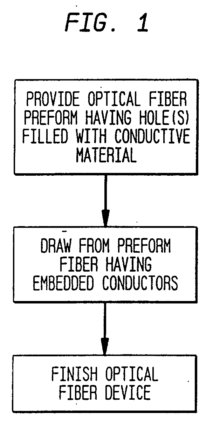

Referring to the drawings, Fig. 1 is a flow diagram of the steps involved in making an optical fiber device having integral longitudinally extending conductive elements. The first step, shown in Block A, is to provide an optical fiber preform having a core region, a cladding region and one or more longitudinally extending holes or gaps filled with conductive material. Advantageously the core and cladding regions are composed of silica glass, with the core region doped to increase its index of refraction *vis-à-vis* the cladding.

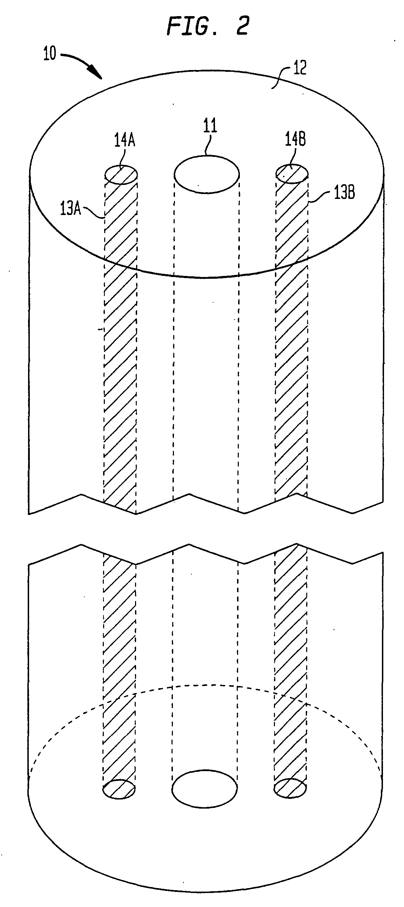

Fig. 2 is a schematic view of a suitable optical fiber preform 10 comprising a central core region 11, a surrounding cladding region 12 and one or more longitudinally extending holes or gaps 13A and 13B filled with conductive material 14A, 14B, respectfully.

The preform can be fabricated by conventional methods using a core rod within a tubular cladding. The rod and tube are appropriately doped to enhance fiber properties. The core contains a dopant, such as germanium, phosphorous or aluminum, to increase its index of refraction. One or more longitudinal holes 13A, 13B are drilled in the preform 10 in positions where the conducting material 14A, 14B is to be inserted. In one of the preferred embodiments, holes are drilled in the cladding region on either side of the core 11 in positions that allow for the placement of one hole to be closer to the core than the other. The hole areas are etched with HF acid to remove excess grinding residue and then fire polished. The preferred method to clean/fire polish the surface is via a plasma. The plasma has the advantage of producing a localized high temperature and does not incorporate water into the glass like a hydrogen-oxygen torch. The preform 10 can optionally be ground on at least one side. This provides a flat region (not shown) where an electrode can be added close to the core.

Alternatively, preform 10 can be prepared by stacking tubes, rods, and doped rods together forming a bundle. Doped rods can be up-doped or down-doped with any dopant that is found to enhance the final fiber properties. A rod can be uniformly doped or doped to have a complicated index profile. Typically a doped rod will be placed in the center of the bundle with an up-doped region for guiding the light (it will contain a core). At least one hollow tube is used in the bundle. The rods and tubes need not be the same size. This bundle is placed inside an outer cladding tube which holds the bundle in place during draw.

In all these methods, the silica next to the conducting element should be devoid of volatile impurities and dissolved gasses which are able to diffuse out of the glass and form a gas bubble, or react with or change the properties of the conductive material placed inside the tube. The regions in which the conducting material need not be round. The conducting element will take the shape of the region in which it is inserted. In some cases, a non-round conducting element can enhance the desired properties by changing the electric field distribution.

Not all open regions in the preform need to be filled with conducting material. In some applications it is desirable to have a fiber with both a conducting element and open regions. In the case where the open regions produce a guiding mode, either by index guiding or due to a band gap, a up-doped core region is not necessary.

One or more longitudinally extending conductive elements are incorporated into the holes or hollow tubes in the assembly. The conductors 14A and 14B can be metals such as aluminum, copper, silver or gold. They can be conveniently incorporated into the preform by disposing metal rods within a tube of core glass, disposing the tube between an outer cladding tube and an inner core rod and collapsing the structure into a solid preform.

Upon collapse, the preform is typically a concentric glass rod having a length of about one meter and an outer diameter of 20-200 mm. The core rod has a diameter of 1-5 mm. If two conductors are used, they are advantageously asymmetric with respect to the core so that the anode 14A is closer to the core than the cathode 14B.

For typical applications of the invention, conducting materials are those having a resistivity of less than 10 µΩ-cm. The material need to flow as the silica is drawn down from preform dimensions (∼3 cm diameter) to fiber dimensions (∼125 microns). This means their viscosity should be of the same order of magnitude or less than silica at the draw temperature. The conducting material should not form appreciable vapor during fiber draw either due to high vapor pressures, reaction with the silica glass or high vapor pressure impurities. Vapor or gas formation during fiber drawing can cause bubbles and air gaps to form in the preform. During draw these gas regions can expand, pushing the conducting material out of the way and cause an electrical short (regions of no conducting material).

The conductive materials need to be solids below 100° C and should not significantly weaken the fiber by forming defect sites or cause the SiO₂ to crystallize. Metals that melt at temperatures below the draw temperature, such as gold, silver and aluminum, fit this requirement. We have found advantageous the use of gold (AlfaAesar Premion 99.999% (metals basis)). Conductive ceramics such as ruthenium oxide and other metaroxides, carbides and nitrides may also be used.

The surface of the metal is cleaned before adding it to the preform. Cleaning methods for the metal materials include a HF acid rinse and other published chemical etchants methods for metals. Specifically, for gold, a mixture of 1 part HCI and 3 parts HNO₃ was used. (See Shyam P. Murarka, Metalization Theory and Practice for VLSI and ULSI, Butterworth-Heinemmann 1993).

Materials with low viscosity (liquid) at the draw temperature, can be added to the preform by forming them into a straight rod with a diameter a little less than that of an inside silica tube or hole. They need to be able to slide in easily. As they are heated, the material melts taking the shape of the silica tube. The remaining solid rod slowly slides down the tube as the liquid metal fills the tube.

Another method for adding the conducting material is to melt it in a reservoir. The tip of preform can be added to the melt and a vacuum can be used to suck the conducting material up into the tubes or holes. The preform may need to be heated so that the material does not solidify before completely filling the tube or hole. An advantage to this method is that any volatile impurities in the material are easily removed before the draw.

Conducting materials can also be added by plasma evaporation on the inside of the tube. The material sits in a reservoir connected to the preform tubes. A vacuum is pulled on the system and the material is heated to a vapor. The material cools and condenses on the tube wall forming a high purity layer evenly dispersed on the inside tube wall.

The next step, shown in Block B of Fig. 1, is to draw from the preform fiber having one or more longitudinally extending integral conductors. This is typically accomplished by lowering the preform into a draw furnace, such as an RF induction furnace, and heating it to melting temperature. Before the preform is drawn, the bottom of the preform must be sealed off such that the conducting material does not leave during the initial part of the draw. Upon sufficient heating, a melted end portion of the preform bearing a fiber strand drops, and the strand is inserted into a fiber drawing station. The parameters are then adjusted to produce a fiber of desired diameter and uniformity. Preferably the draw temperature is low so that the glass has a high viscosity and retains its desired shape. The conducting material will fill the opening space and form the shape of the space in the drawn fiber.

The drawing station can be a conventional fiber drawing station such as described in Optical Fiber Telecommunications, Ed. S.E. Miller and I.P. Kaminow (Academic Press, 1988), pp. 182-185, which is incorporated herein by reference. The fiber drawing speed and tension can be under control of a computer.

The most widely used choice of draw furnace is a carbon resistance furnace employing a method that heat the glass until it softens and the metal melts via convection through the glass. The furnace has a water cooled case and requires an inert gas protective atmosphere around the heater.

An alternative method transfers heat to the metal directly using r.f. induction heating. This method can be employed with or without external heating using a CO₂ laser to assist in softening of the glass. (See W.H. Grodkiewicz, "Fused Silica Fibers with Metal Cores", Mat. Res. Bull., Vol. 10, pp. 1085-1090, 1975. Pergamon Press, Inc.).

The third step (Block C of Fig. 1) is to finish the optical fiber device in the conventional manner. For example, if the device is to be an electro-optically controlled grating, a grating is induced in the fiber core and a voltage source is applied to the embedded conductors to apply a controlling electric field across the core. If the device is to be a thermally controlled grating, a grating is induced and a current source is applied to one or more embedded resistive conductors to apply heat to the core.

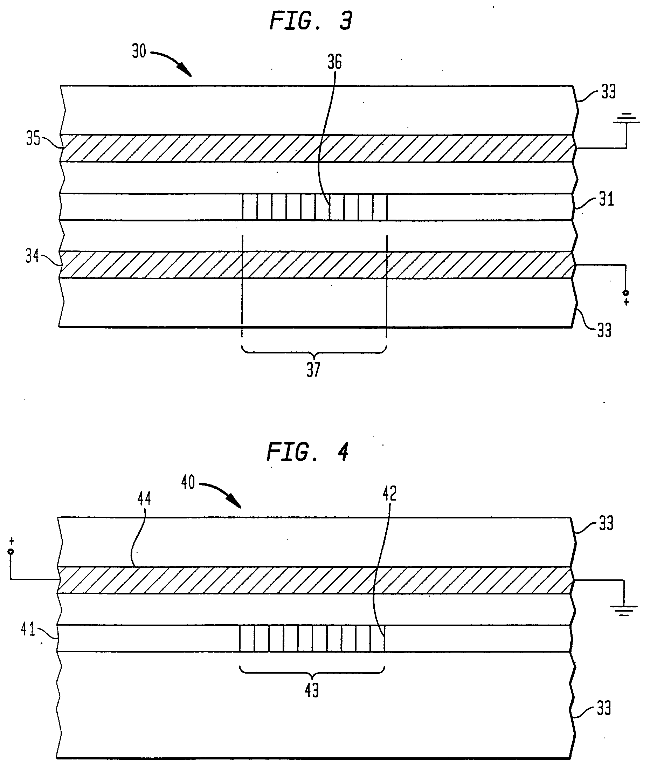

Fig. 3 illustrates in longitudinal cross section an exemplary electro-optic fiber device 30 made by the process of Fig. 1. The device 30 is composed of an inner core 31 disposed within a cladding 33 between a pair of conductors 34 and 35. The core is composed of electro-optical material and, advantageously is closer to the anode 34 than to the cathode 35 and may be off-center within the cladding. A sequence of refractive index perturbations 36 forms a fiber grating 37 (Bragg or long period) within the core. Typical dimensions are 125 µm for the cladding O.D., 4.0 µm for the core and 40 µm for each conductor. The conductor centers can be separated by about 30 µm, and the core center is advantageously 21-25 µm from the anode center. The application of voltage between anode 34 and cathode 35 will change the refractive index of the core, thus changing the spectral response of the grating.

Fig. 4 illustrates in longitudinal cross section an exemplary thermally adjustable optical fiber device made by the process of Fig. 1. The device 40 is composed of an inner core 41 including a sequence of index perturbations 42 forming a fiber grating 43 (Bragg or long period). An integral embedded resistive conductor 44 longitudinally extends through the fiber adjacent the core grating. Application of current to the resistive conductor 44 heats the core grating, changing the optical pathlength between successive perturbations and thereby changes the spectral response of the grating.

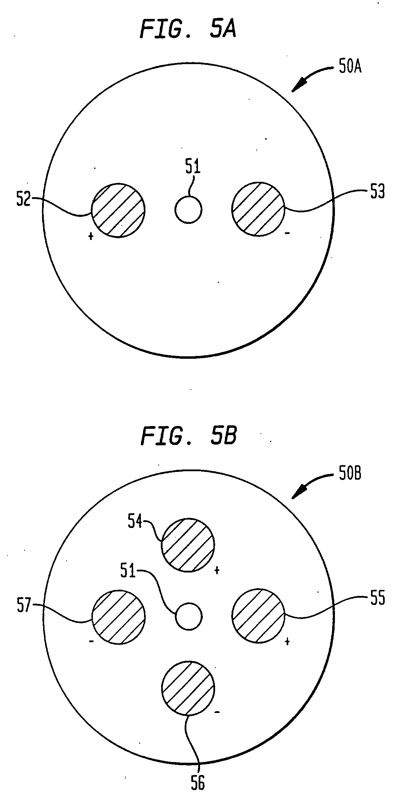

Figs. 5A and 5B illustrate in transverse cross section exemplary polarization control devices made by the process of Fig. 1. The Fig. 5A device comprises a fiber 50 with a core 51 and pair of electrodes 52 and 53 adjacent the core on opposite sides. A voltage applied between electrodes 52 and 53 will polarize the intervening core region, establishing a preferred optical polarization direction between the two electrodes. The effect can be enhanced by making the core of electro-optic material such as liquid crystal material.

The 5B device is similar in principle to the 5A device except that it uses four electrodes 54, 55, 56 and 57 which can be switched in voltage polarity, permitting switching of the preferred polarization direction. For example, if 54, 55 are both at positive potential and 56, 57 are negative, the preferred optical polarization is along the line separating the electrodes 54, 57 from 55, 56.

The invention may now be better understood by consideration of the following specific examples.

### Example 1:

A preform is fabricated having a germanium doped step index core with a delta n of 0.005, a core diameter of 0.85 mm, and a outside diameter of 13 mm. Two holes 3 mm in diameter are drilled 6 inches deep on opposite sides of the core using a diamond tipped drill. The holes are drilled 0.3 and 0.5 millimeter from the core. The holes are etched with HF acid for 20 minutes, rinsed with distilled water, and firepolished. Two millimeter diameter gold rods, six inches long are used as the conducting material. The gold is cleaned with a mixture of 1 part HCl and 3 parts HNO₃ and placed in the prepared holes. The preform is then placed into a draw furnace at a temperature of 1990° C. A conventional drawing method is employed with a draw speed of 3 m/sec. Fiber is drawn to 125 microns in diameter, has a single mode cut off of 1.3 microns, and is collected onto a standard spool.

### Example 2:

A high purity, low chlorine, Hereaus silica tube is placed on a glass lathe and is etched, stretched and collapsed to an inner and outer diameter of 3 and 6 mm respectively, a length of 50 cm, and containing a 6 mm ID reservoir at one end. Gold is inserted and melted in the reservoir at high temperatures to remove any volatile impurities. The reservoir is then heated to the point the glass walls of the reservoir soften, and using a vacuum on top of the tube, the reservoir is collapsed causing the gold to flow up into the tube. While under vacuum, the tube is sealed off at both ends. A preform is prepared by stacking four high purity silica rods 6 mm in diameter and two of the gold containing tubes around a 6 mm rod containing a step index germanium core 1.15 mm in diameter such that the two tubes are on opposite sides. A Hereaus F-300 outer cladding tube, with dimensions 19 by 21 mm, is collapsed around the bundle holding the bundle in place during draw. The preform is drawn using the conditions described in Example 1.

It is to be understood that the above-described embodiments are illustrative of only a few of the many possible specific embodiments which can represent applications of the principles of the invention. Numerous and varied other arrangements can be readily devised by those skilled in the art without departing from the spirit and scope of the invention.

## Claims

1. A method for making an optical fiber device comprising the steps of:
providing an optical fiber preform having a core region, a cladding region and one or more longitudinally extending holes containing conductive material; and
drawing from the preform optical fiber containing one or more longitudinally extending embedded conductors of the conductive material.

2. The method of claim 1 wherein the optical fiber preform is provided by drilling longitudinally extending holes in a glass preform and filling the holes with conductive material.

3. The method of claim I wherein the optical fiber preform is provided by consolidating into an optical fiber preform an assembly of glass rods and tubes, one or more of the tubes filled with conductive material.

4. The method of claim 2 wherein a hole is filled with conductive material by suction of liquid conductive material.

5. The method of claim 3 wherein a tube is filled with conductive material by suction of liquid conductive material.

6. The method of claim 2 or 3 wherein a hole is filled with conductive material by inserting a rod of conducive material.

7. The method of claim 1 wherein the one or more holes comprise a pair of holes on opposite sides of the core region and the fiber is drawn with a pair of longitudinally extending conductors on opposite sides of the fiber core for applying an electrical field across the fiber core.

8. The method of claim 1 wherein at least one longitudinally extending conductor is a resistive conductor for heating the fiber core.

9. The process of claim 7 wherein the core region of the preform is disposed closer to one conductor than to the other conductor.

10. An optical fiber preform comprising:
a concentric cylindrical glass body comprising an interior core rod;
an outer cylinder of cladding glass peripherally surrounding the core; and
disposed in the cladding glass adjacent the core on opposite sides thereof, a pair of longitudinally extending conductors.
